# EUROPEAN PATENT SPECIFICATION

(11) **EP 3 126 241 B1**
(45) Date of publication and mention of the grant of the patent: **06.05.2020**
(21) Application number: 15773979.8
(22) Date of filing: 02.04.2015
(51) Int. Cl.: B64D 11/06, B64D 11/00

(54) **SHARED ENTRANCE SEATING ARRANGEMENT**
SITZANORDNUNG MIT GEMEINSAM GENUTZTEN EINGANG
AGENCEMENT D'ASSISE À ENTRÉE COMMUNE

(30) Priority: 04.04.2014 US 201461975634 P; 15.07.2014 US 201462024817 P
(43) Date of publication of application: 08.02.2017
(60) Divisional application: 18176463.0
(73) Proprietor: C&D Zodiac, Inc., Huntington Beach, CA 92647 (US)
(72) Inventor: SAVIAN, Scott, Huntington Beach, CA 92647 (US)
(74) Representative: Stevenson-Hill, Jack Patrick
(86) International application number: PCT/US2015/024171
(87) International publication number: WO 2015/153923

(56) References cited:
- WO-A1-2009/073244
- US-A- 5 177 616
- US-A1- 2012 248 246
- US-A1- 2012 248 246
- US-A1- 2012 313 406
- US-A1- 2013 248 653
- US-A1- 2014 035 330
- US-B2- 7 607 612

## Description

### FIELD OF THE INVENTION

The invention relates to passenger seating and storage in the interior of passenger aircraft. In particular, the invention relates to a shared entrance seating arrangement.

### BACKGROUND OF THE INVENTION

Commercial aircraft, such as the Airbus A320 or Boeing 737 are typically constructed from modular components, the size, weight and construction of which are dictated by many considerations, including fuselage dimensions, aesthetic and safety considerations. Many of these requirements are imposed by law or regulation. Aircraft components, such as overhead stowage compartments, seats, lavatories, galleys, lighting systems, etc. are all required to function within strictly confined spaces.

Manufacturers of aircraft are constantly refining interior aircraft designs to achieve more comfort and utility for passengers and crew within carrier-imposed restraints on cost, weight, maintenance down-time, and safety. Commercial passenger aircraft generally include overhead luggage storage bins mounted from the ceiling of the aircraft over the passenger seats. These bins are designed to accommodate the size, shape, and weight of passenger carry-on luggage.

According to its abstract, US-A-2012/248246 describes a lounge assembly configured to be positioned in the interior of an aircraft. The lounge assembly includes a first seat shell configured to at least partially surround a passenger seat, and an overhead storage bin assembly. The overhead storage bin assembly includes first and second posts configured to be secured to a floor of the aircraft, and an overhead bin housing supported by the first and second posts. The overhead bin housing includes at least a first overhead storage bin that is positioned generally above the first seat shell.

### SUMMARY OF THE PREFERRED EMBODIMENTS

Aspects of the present invention are defined in the appended independent claim. Preferred embodiments of the present invention are defined in the appended dependent claims.

In accordance with a first aspect of the present invention, there is provided an aircraft lounge assembly that includes an enclosure having a rear wall, first and second side walls and a forward wall that cooperate to define a seating area. The lounge assembly also includes first and second seats positioned in the seating area, and a first dividing wall positioned between the first and second seats. The first dividing wall divides the seating area into a first seat section and a second seat section. The front wall includes a shared entrance space defined therein. A first seat path is defined between the shared entrance space and the first seat section and a second seat path is defined between the shared entrance space and the second seat section. In a preferred embodiment, the first dividing wall includes a privacy divider that is movable up and down between first and second positions.

Preferably, the lounge assembly includes an overhead storage bin assembly that includes at least a first post configured to be secured to a floor of the aircraft and is positioned generally between the first and second seats, and an overhead bin housing supported by the first post. In a preferred embodiment, the overhead bin housing includes at least first and second overhead storage bins that are positioned generally above the first and second seats, respectively.

In a preferred embodiment, the lounge assembly includes a tower positioned at an end of the first dividing wall that includes first and second pivotable monitors connected thereto. The first monitor is pivotable between a closed position and an open position where it is positioned in the first seat section, and the second monitor is pivotable between a closed position and an open position where it is positioned in the second seat section. The lounge assembly includes a first support positioned in the first seat section adjacent the front wall and pivotable between a first position and a second position, and a second support positioned in the second seat section adjacent the front wall and pivotable between a first position and a second position. The front wall includes a first ledge on which the first support is positioned when it is in the second position, and a second ledge on which the second support is positioned when it is in the second position.

In a preferred embodiment, the lounge assembly includes third and fourth seats positioned in the seating area, and a second dividing wall positioned between the second and third seats and a third dividing wall positioned between the third and fourth seats. The third dividing wall divides the seating area into a third seat section and a fourth seat section, and the front wall includes a second shared entrance space defined therein. A third seat path is defined between the second shared entrance space and the third seat section and a fourth seat path is defined between the second shared entrance space and the fourth seat section. Preferably, the first dividing wall includes a first privacy divider that is movable up and down between first and second positions, the second dividing wall includes a second privacy divider that is movable up and down between first and second positions, and the third dividing wall includes a third privacy divider that is movable up and down between first and second positions. In a preferred embodiment, the lounge assembly includes an overhead storage bin assembly that includes at least first and second posts each configured to be secured to a floor of the aircraft. The first post is positioned generally between the first and second seats and the second post is positioned generally between the third and fourth seats. An overhead bin housing is supported by the first and second posts. Preferably, the overhead bin housing includes at least first, second, third and fourth overhead storage bins that are positioned generally above the first, second, third and fourth seats, respectively.

In a preferred embodiment, the second dividing wall extends between the rear wall and the front wall, and the first and third dividing walls do not extend to the front wall.

Generally, the invention is laterally positioned personal overhead storage space (such that it opens toward the front or rear of the aircraft) that is ultimately supported by the floor of an aircraft. Accordingly, in a broadest sense, an embodiment can include a single post, secured to the floor of the aircraft that positions an overhead storage bin above a passenger seat. In another embodiment, the overhead storage bin may be positioned over the passenger seat by the seat shell. The structure that supports the overhead bin may be one or posts, one or more seat shells, walls, monuments, etc.

One of the purposes of the invention is to maximize the number of seats on an aircraft, particularly in a business or first class compartment (however, the invention can also be utilized in economy class), and provide for convenient and easily accessible storage for passengers. The configuration of seats, seat shell design, overhead bin design and configuration each contribute to achieving this purpose while simultaneously providing for passenger convenience, comfort and safety.

In a preferred embodiment, the overhead storage bins make more efficient use of space in the aircraft interior (preferably eliminating closets that require dedicated floor space). In a preferred embodiment, the overhead storage bins are accessible to each passenger without having to invade another passenger's space. As shown in the drawings, the overhead storage bins are placed over the passenger to create a more comfortable, enclosed space. It will be appreciated that the configuration of bin numbers, location and size are flexible and not a limitation on the present invention. For the designers of aircraft, the present invention allows the bin to move with the seat, thereby freeing up the ability to arrange the seats as desired; and the passenger service unit can be placed generally above the passenger and/or in the column that supports the overhead bin as more fully described below.

Overhead storage bin assemblies are well known in the art. For example, see U.S. Patent No. 4,637,642 issued on January 20, 1987, U.S. Patent No. 5,567,028 issued on October 22, 1996, and U.S. Patent Publication No. 2011/0253837, published on October 20, 2011. Seat shells are also known in the art. For example, see U.S. Patent No. 6,170,786 issued on January 9, 2001, U.S. Patent No. 7,419,214 issued on September 2, 2008, and U.S. Patent Publication No. 2009/0146004, published on June 11, 2009.

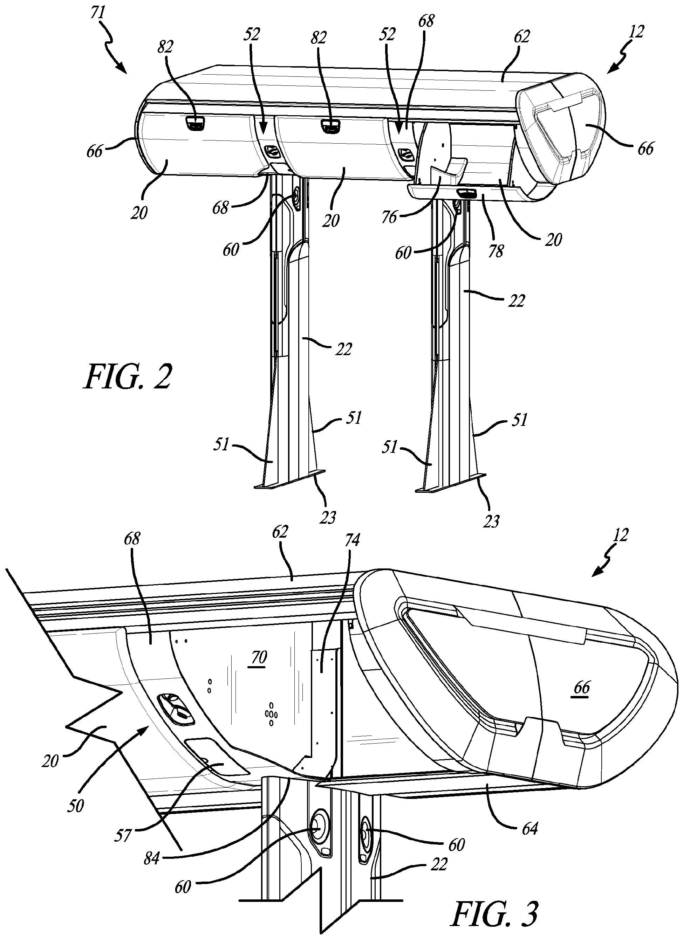

In accordance with a first aspect of the present invention, there is provided an aircraft that includes at least a fuselage having an inner side wall and a floor, at least a first seat having an upper portion, at least a first laterally extending overhead storage bin positioned generally above the upper portion of the first seat, and support structure secured to the floor and supporting the first overhead storage bin. The first seat is secured to the floor and the first overhead storage bin has an open and a closed configuration (see FIG. 2). The first overhead storage bin opens toward the front or the rear of the aircraft. In a preferred embodiment, the aircraft also includes a second seat with an upper portion and that is secured to the floor and is adjacent the first seat. The aircraft also includes a second laterally extending overhead storage bin positioned generally above the upper portion of the second seat and adjacent the first overhead storage bin, and support structure secured to the floor and supporting the second overhead storage bin. The second overhead storage bin has an open and a closed configuration and it opens toward the front or the rear of the aircraft. In a preferred embodiment, the first and second overhead storage bins are not secured to the inner side wall of the aircraft.

There is also provided a lounge assembly configured to be positioned in the interior of an aircraft. The lounge assembly includes a first seat shell configured to at least partially surround a passenger seat, and an overhead storage bin assembly. The overhead storage bin assembly includes first and second posts configured to be secured to a floor of the aircraft, and an overhead bin housing supported by the first and second posts. The overhead bin housing includes at least a first overhead storage bin that is positioned generally above the first seat shell. In a preferred embodiment, the overhead bin housing includes a second overhead storage bin positioned on one side of the first overhead storage bin and a third overhead storage bin positioned on the opposite side of the first overhead storage bin. When the lounge assembly is positioned in the interior of an aircraft, the first, second and third storage bins face forward. Preferably, the lounge assembly includes a second seat shell positioned on one side of the first seat shell and a third seat shell positioned on the opposite side of the seat shell bin. The second overhead storage bin is positioned generally above the second seat shell and the third overhead storage bin is positioned generally above the third seat shell.

Preferably, the overhead bin housing includes fourth, fifth and sixth overhead storage bin assemblies, such that when the lounge assembly is positioned in the interior of an aircraft, the fourth, fifth and sixth storage bins face aft. And, the lounge assembly includes fourth, fifth and sixth seat shells. The fourth overhead storage bin is positioned generally above the fourth seat shell, the fifth overhead storage bin is positioned generally above the fifth seat shell, and the sixth overhead storage bin is positioned generally above the sixth seat shell.

Preferably, the lounge assembly includes first and second passenger service units. The first passenger service unit is positioned between the first and second overhead storage bins and the second passenger service unit is positioned between the first and third overhead storage bins. Preferably, the passenger service units include at least one gasper, and a passenger reading light is mounted on at least one of the first and second posts.

There is also provided an
overhead storage bin assembly configured to be positioned in the interior of an aircraft that includes first and second posts configured to be secured to a floor of the aircraft, and an overhead bin housing supported by the first and second posts. The overhead bin housing includes at least a first overhead storage bin. When the overhead storage bin assembly is positioned in the interior of an aircraft, the first overhead storage bin is positioned generally above a passenger seat.

There is also provided a
method of positioning overhead storage bins within an aircraft interior. The method includes providing a first group of seats and a first group of overhead storage bins, positioning the first group of seats within the aircraft interior such that each of the first group of seats face forwardly, and positioning the first group of overhead storage bins within the aircraft such that each of the first group of overhead storage bins is positioned above one of the first group of seats. The first group of overhead storage bins each face forwardly. Preferably, the aircraft interior has a floor and an interior side wall, the first group of seats are each secured to the floor, and the first group of overhead storage bins are supported above the first group of seats by support structure and are not secured to the interior side wall.

Preferably, the method further includes providing a second group of seats and a second group of overhead storage bins, positioning the second group of seats
within the aircraft interior such that each of the second group of seats face aft, and positioning the second group of overhead storage bins within the aircraft such that each of the second group of overhead storage bins is positioned above one of the second group of seats. The second group of overhead storage bins each face aft. Preferably, the aircraft interior has a floor and an interior side wall, the first group of seats and the second group of seats are each secured to the floor, the first group of overhead storage bins are supported above the first group of seats by support structure and are not secured to the interior side wall and the second group of overhead storage bins are supported above the second group of seats by support structure and are not secured to the interior side wall.

### BRIEF DESCRIPTION OF THE DRAWINGS

FIG. 1 is a perspective view of the interior of an aircraft first class cabin showing a series of lounge assemblies in accordance with a preferred embodiment of the present invention;
FIG. 2 is a perspective view of a overhead bin assembly in accordance with a preferred embodiment of the present invention;
FIG. 3 is a perspective view of a portion of the overhead bin assembly of FIG. 2, with one of the overhead storage bins removed;
FIG. 4 is a front elevational view of one of the lounge assemblies of FIG. 1 with a portion of the seat shells shown in cross section;
FIG. 5 is an end elevational cross section of a portion of the overhead bin assembly of FIG. 2 taken along line 5--5 of FIG. 4;
FIG. 6 is a top plan cross section of a portion of the overhead bin assembly of FIG. 2 taken along line 6--6 of FIG. 4;
FIG. 7 is a bottom elevational view of the overhead bin assembly of FIG. 2, with the posts in cross-section;
FIG. 8 is a top plan view of a portion of the interior of an aircraft showing a plurality of lounge assemblies in schematic;
FIG. 9 is a top plan view of a portion of the interior of an aircraft taken along the box labeled 9 in FIG. 8; and
FIG. 10 is a perspective view of one of the lounge assemblies of FIG. 1.
FIG. 11 is a perspective view of a lounge assembly in accordance with another preferred embodiment of the present invention;
FIG. 12 is a top plan view of aft and forward facing lounge assemblies of FIG. 11 with the overhead storage bins omitted;
FIG. 13 is a perspective view of two adjacent seats in the lounge assembly of FIG. 11 with the divider lowered to show the companion travel experience;
FIG. 14 is a perspective view of a portion of a seating area in the lounge assembly of FIG. 11;
FIG. 15 is a perspective view of another portion of a seating area in the lounge assembly of FIG. 11; and
FIG. 16 is a top plan view of two lounge assemblies with the overhead storage bins omitted in accordance with another embodiment of the present invention.

Like numerals refer to like parts throughout the several views of the drawings.

### DETAILED DESCRIPTION OF THE PREFERRED EMBODIMENTS

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are references to the same embodiment; and, such references mean at least one of the embodiments.

Reference in this specification to "one embodiment" or "an embodiment" means that a particular feature, structure, or characteristic described in connection with the embodiment is included in at least one embodiment of the-disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks: The use of highlighting has no influence on the scope and meaning of a term; the scope and meaning of a term is the same, in the same context, whether or not it is highlighted.

It will be appreciated that the same thing can be said in more than one way. Consequently, alternative language and synonyms may be used for any one or more of the terms discussed herein. No special significance is to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

It will be appreciated that terms such as "front," "back," "top," "bottom," "side," "short," "long," "up," "down," "aft," "forward," "rear," "end" and "below" used herein are merely for ease of description and refer to the orientation of the components as shown in the figures. It should be understood that any orientation of the components described herein is within the scope of the present invention.

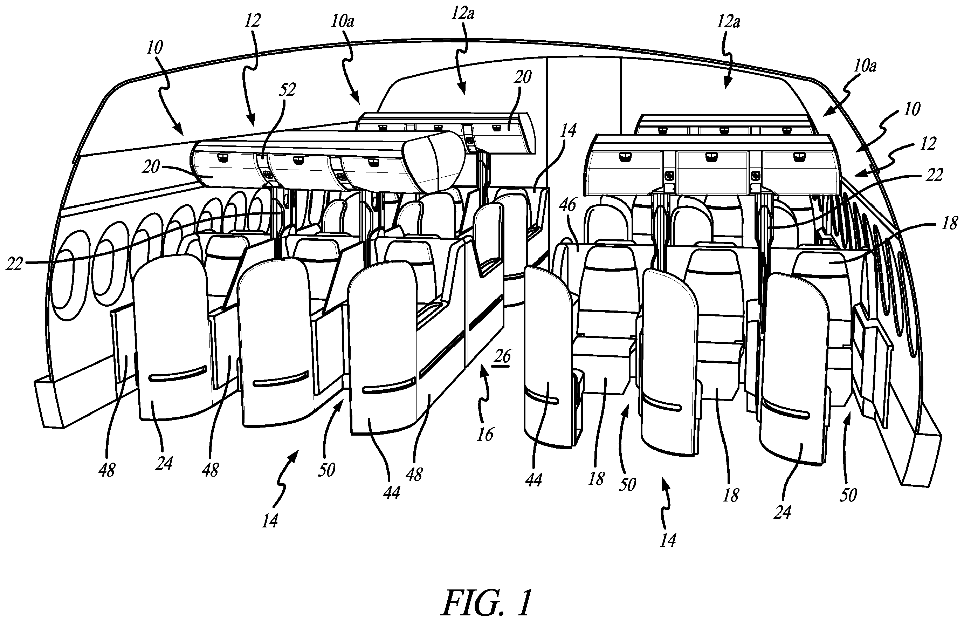

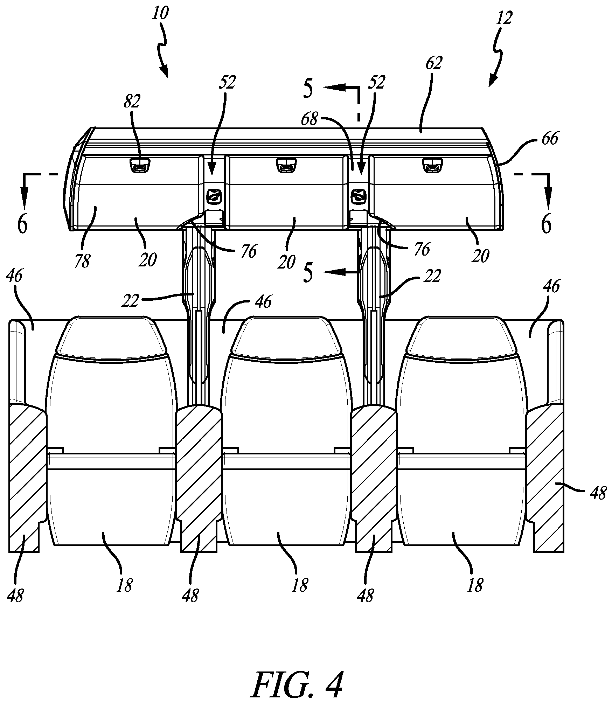

Referring now to the drawings, wherein the showings are for purposes of illustrating the present invention and not for purposes of limiting the same, FIGS. 1-10 show a first embodiment of a lounge assembly 10 that includes a floor mounted overhead bin assembly 12 and a plurality of seat shells 24. FIG. 1 shows a series of lounge assemblies 10 in the first class cabin of an aircraft. The two forward lounge assemblies 10 include a forward facing suite 14 and an aft facing suite 16, and the two aft lounge assemblies 10a include only a forward facing suite 14. For simplicity, most of the description herein focuses on the lounge assembly 10 with both forward and aft facing suites 14 and 16, which includes six seats 18 and six overhead storage bins 20. However, it will be understood that the lounge assembly 10a with only a forward facing suite 14 is essentially half of lounge assembly 10 and includes three seats 18 and three overhead storage bins 20, and typically backs up to a wall. However, this is not a limitation on the present invention. In another embodiment, the aircraft may include a plurality of lounge assemblies 10a with only a forward facing suite 14.

In a preferred embodiment, the forward facing suite 14 and the aft facing suite 16 each include three seats 18, for a total of six seats 18 and six overhead storage bins 20, thereby providing each passenger with their own overhead storage bin 20. In particular, the invention is contemplated for use with seating and overhead storage bins on passenger aircraft. However, this is not a limitation on the present invention and the lounge assembly 10 can be used in other vehicles, such as a bus, automobile, train or the like.

As is shown in FIG. 2, the overhead storage bin assembly 12 includes posts 22 that support the overhead storage bins 20 and associated components (described below). In a preferred embodiment, the posts 22 include attachment feet 23 that are secured to the existing seat track in an aircraft. However, this is not a limitation and the posts 22, and or attachment feet 23 can be mounted to the aircraft at a point other than the seat track.

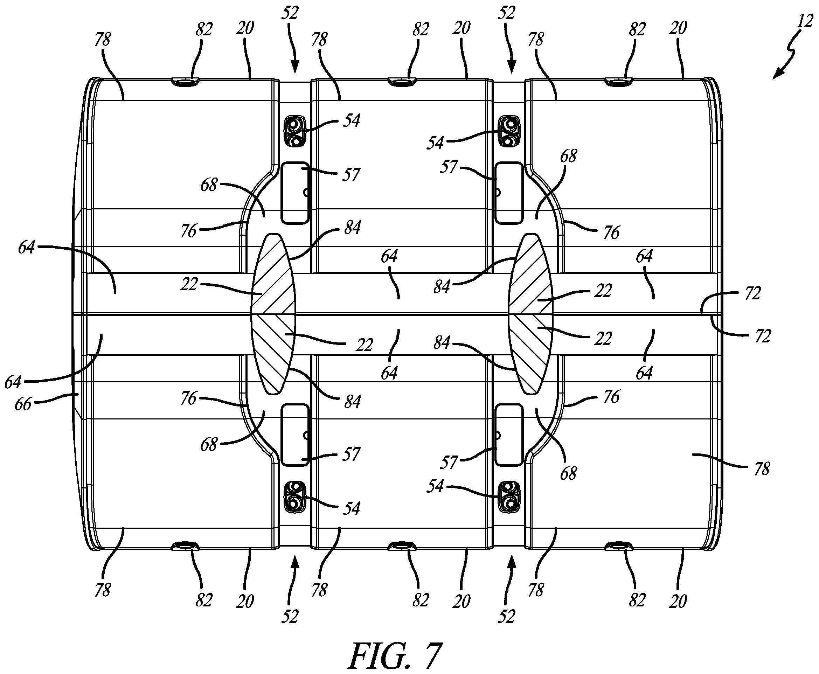

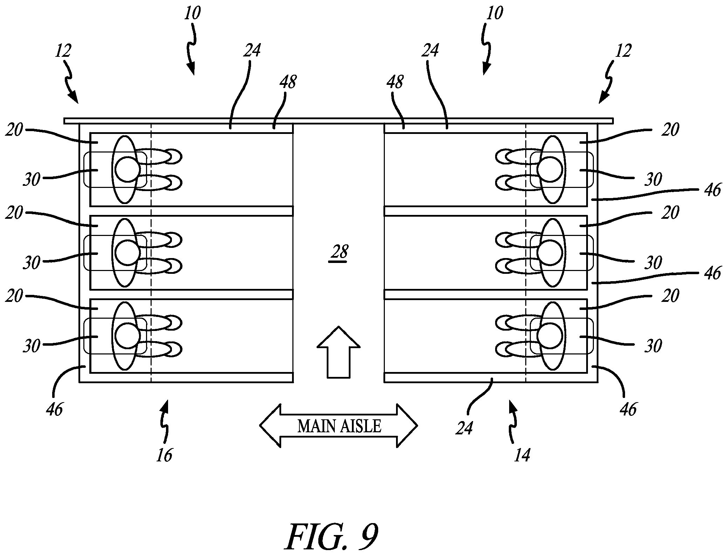

In a preferred embodiment, each seat 18 is disposed within a seat shell 24. As shown in FIGS. 7 and 9, the forward facing suite 14 and the aft facing suite 16 each include three seat shells 24 for at least partially surrounding each seat 18. In a preferred embodiment, the posts 22 are secured to the seat shells 24 using mechanical fasteners, such as screws, bolts or the like. In another embodiment, the posts 22 can be secured to the seat shells 24 using rivets, adhesive or any other fastening means known in the art. In another embodiment, the seat shells 24 are not secured to the posts 22. In another embodiment, the posts 22 can be omitted and the seat shells 24 can include high enough walls that the overhead storage bins 20 are secured to and supported by the seat shell(s) 24 (which are secured to the floor). It will be understood that forward facing means that within an aircraft, the overhead storage bins 20 open toward the front of the aircraft and passengers seated in the seats 18 within a seat shell 24 face the front of the aircraft. It will be understood that aft facing means that within an aircraft, the overhead storage bins 20 open toward the rear of the aircraft and passengers seated in the seats 18 within a seat shell 24 face the rear of the aircraft. In other words, the overhead storage bins 20 are positioned laterally across the fuselage of the aircraft, as is shown in FIG. 1.

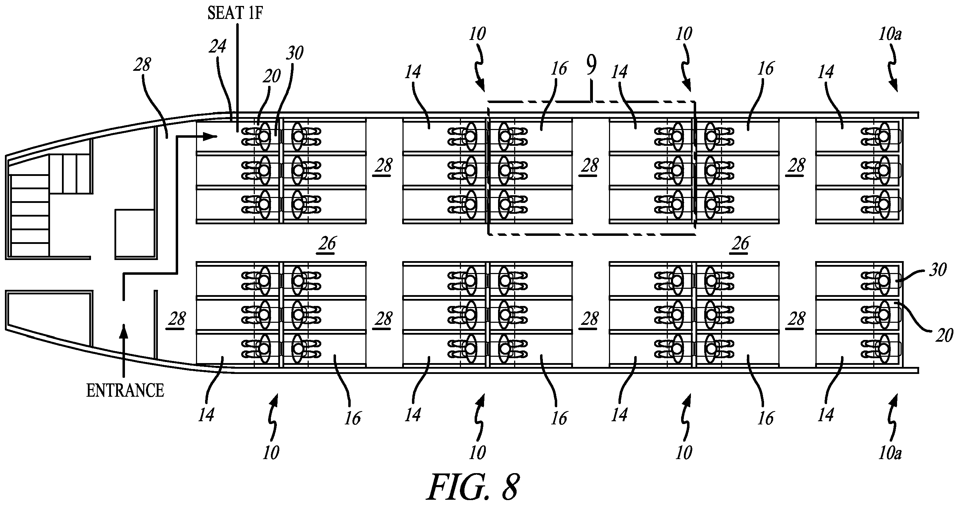

FIGS. 8 and 9 show plan views of the interior layout of an aircraft utilizing a plurality of lounge assemblies 10 of the present invention. As shown, the arrangement of the lounge assemblies 10 and 10a and the separation between them provides a single longitudinal main aisle 26 and perpendicular cross aisles 28. The cross aisles 28 provide access for passengers seated in either the aft facing suite 16 or forward facing suite 14 adjacent to the cross aisle 28. Therefore, when passengers enter the cabin, they step into their assigned seat shell before placing their luggage 30 in their personal overhead storage bin 20, instead of holding up the other boarding passengers. For example, as shown in FIG. 7, when the passenger seated in seat 1F enters, in order to get to his overhead storage bin 20, he must step into his seat shell 24. This prevents him from standing in the main aisle 26 and holding up the passengers boarding behind him.

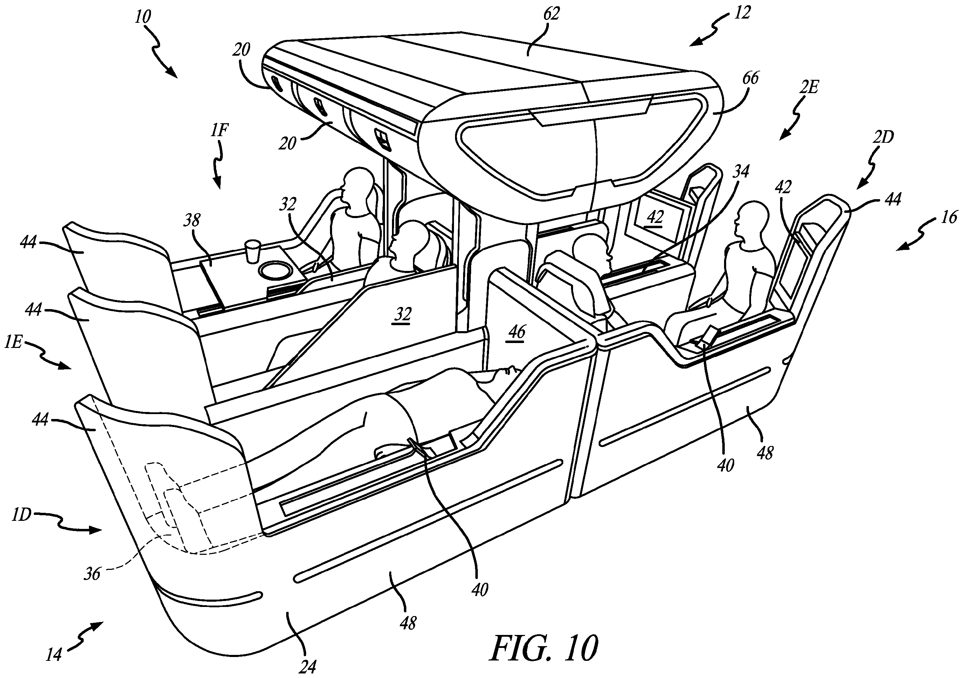

FIG. 10 is a perspective view of a single lounge assembly 10 and illustrates a number of the different features thereof. For descriptive purposes, the five seats that are shown are labeled 1D, IE, IF, 2D and 2E. In a preferred embodiment, the lounge assembly 10 includes privacy dividers 32 that raise and lower to provide privacy for adjacent passengers. As will be appreciated, each row of three seats preferably includes two privacy dividers 32. As is shown in FIG. 10, the privacy divider 32 between seats 1D and IE is up and the privacy divider 32 between seats IE and 1F is down. In a preferred embodiment, the privacy dividers 32 are housed in a slot 34 and can be raised and lowered by hand. In another embodiment, the privacy dividers 32 can be automated. In another embodiment, each seat can include a privacy divider 32. I.e., the seat adjacent the main aisle 26 can also include a privacy divider 32.

It should be understood by those of ordinary skill in the art that any type of seat is within the present invention. Preferably the seats include an upper portion for supporting the passenger's back and a seat portion. In a preferred embodiment, the seats 18 are fully reclinable seats that allow a passenger to lay prone for sleeping, as shown in seat 1D. Preferably, the seat shell 24 includes a support 36 at the end opposite the seat 18. The support 36 can be used for supporting the sleeping passengers feet in seat 1D or can be used to support a sitting passenger, as shown in seat 2D. With this feature, two passengers can sit within the same seat shell 24 on both the seat 18 and the support 36. In a preferred embodiment, the support 36 is foldable or pivotable such that it can be raised and lowered or at least a part of it can be raised or lowered or otherwise stowed so that it is out of the way when not in use.

As shown in FIG. 10, in a preferred embodiment of the invention, the lounge assembly 10 can also include tray tables 38, docks 40 for electronic devices, such as portable music players, cell phones, tablets, etc. and video/television monitors 42 that are pivotable (see seat 2D vs. seat 2E). In a preferred embodiment, the tray table 38 can be swiveled or pivoted forwardly (within a horizontal plane) so that the passenger can exit the seat shell 24 when the tray table 38 is deployed and out of its stowage compartment in the side wall 48. However, none of these features are a limitation on the present invention and they can be omitted. It will be appreciated by those of ordinary skill in the art that other features and amenities can be included.

In a preferred embodiment, as is best shown in FIGS. 1 and 10, the seat shells 24 each include a front wall 44, rear wall 46, two side walls 48 and an entrance 50. It should be understood that the front and rear walls are described as front and rear herein with respect to the passenger seated therein. It will be appreciated that the side walls 48 between the seats can be separate pieces that are secured together or can be a unitary piece. As will appreciated by those of skill in the art, the seat shells 24 can include other known features and components, such as armrests, seat belts, audio/video controls, storage compartments, pockets and the like.

Referring now to FIGS. 2-6, the overhead bin assembly 12 will now be described. As discussed above, lounge assembly 10 includes six seats 18 and six overhead storage bins 20 and lounge assembly 10a includes three seats 18 and three overhead storage bins 20. Likewise, overhead bin assembly 12 includes six overhead storage bins and overhead bin assembly 12a includes three overhead storage bins. For simplicity, the description herein focuses on overhead bin assembly 12. However, it will be understood that overhead bin assembly 12a is essentially half of overhead bin assembly 12.

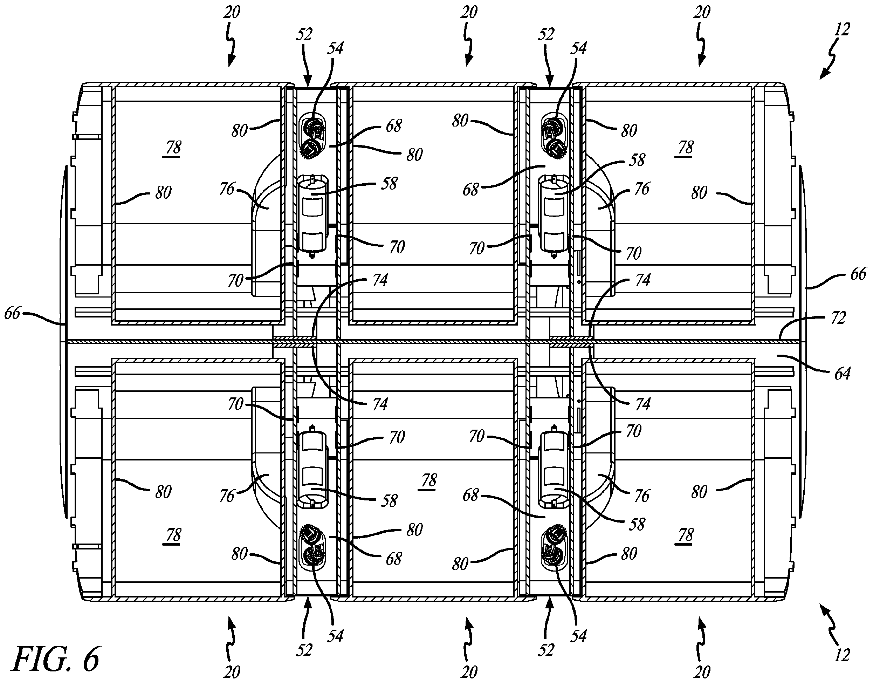

As is shown in FIG. 2, overhead bin assembly 12 includes two posts 22 that support the overhead bins 20 and the necessary components therefore. In a preferred embodiment, the posts 22 include struts 51 to provide further columnar support and to help prevent the overhead bin assembly 12 from tipping over. Generally, as is best shown in FIG. 6, overhead bin assembly 12 includes six overhead storage bins 20 with four passenger service units 52 disposed between overhead storage bins 20. The passenger service units 52 include gaspers 54, masks 56, a cover 57 for the masks, and oxygen units 58. In another embodiment, the passenger service units 52 can include passenger reading lights. However, in the embodiment shown in the figures, the passenger reading lights 60 are mounted on the posts 22, as shown in FIG. 3. The passenger service units 52 can also include other components or features known in the art, such as flight attendant call buttons, etc. In a preferred embodiment, the wiring, air ducts and other components necessary for the operation of the passenger service unit components and lights, run up and through the posts 22. In another embodiment, they can extend from the inner side wall into the outboard most end wall.

As shown in FIGS. 2-3 and 6, overhead bin assembly 12 includes an upper housing 62, lower housing 64, end walls 66, passenger service unit covers 68, dividers 70, and a center wall 72 (this entire structure is referred to herein as the overhead bin housing 71). It will be understood that center wall 72 can be a single piece, as shown in FIG. 6 or two separate pieces (as shown in FIG. 7) secured to one another or backed up to one another. In other words, the entire overhead bin assembly 12 can be constructed as one unit or it can be constructed as two separate overhead bin assemblies 12a placed back to back (whether secured to one another or not).

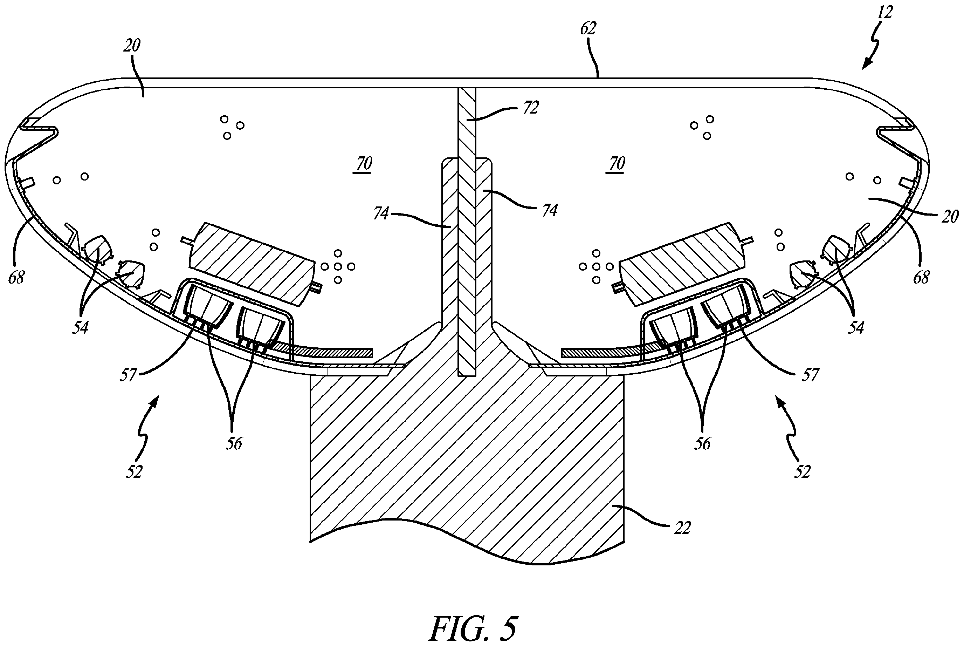

As shown in FIGS. 3 and 5, in a preferred embodiment, the post 22 includes two extension members 74 that extend upwardly into the interior of the overhead bin housing 71 on either side of the center wall 72. In other words, the extension members 74 define a space therebetween, which receives center wall 72. The extension members 74 are secured to the center wall 72 to provide support for the overhead bin housing 71 and overhead storage bins 20. As shown in FIGS. 3 and 6, the passenger service unit cover 68 includes a cut out 84 therein in which a portion of the post 22 is received. As shown in FIG. 6, the lower housing 54 includes a number of different pieces. However, this is not a limitation on the present invention. The passenger service unit 52 is housed or defined by the passenger service unit cover 68, a divider 70 on either side, and the upper housing 62. In another embodiment, a passenger service unit 52 can be located adjacent the end wall 66.

As shown in FIG. 6, each overhead storage bin 20 includes a bin housing 78, side walls 80 and a latch system 82 (see FIG. 2). In a preferred embodiment, the outside bins include clearance members 76 that provide clearance with the posts 22 when the bins 20 are opened and closed. The clearance members 76 extend into the interior of the outside overhead storage bins 20 and are generally arc shaped.

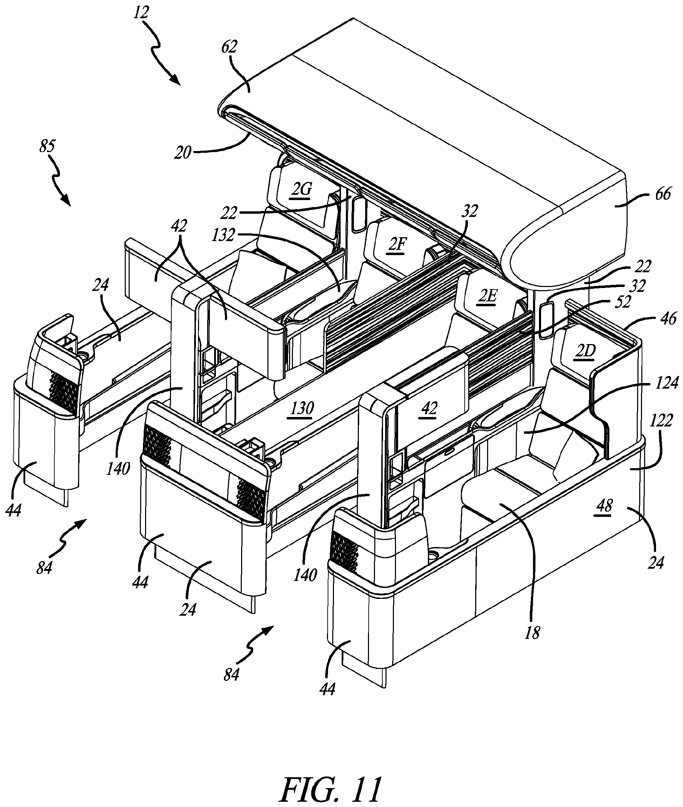

FIGS. 11-15 show another embodiment of a lounge assembly 85 that includes a floor mounted overhead bin assembly 12 and a plurality of seats 18 and surrounding seat shells 24. In this embodiment, adjacent seats 18 can be accessed by a common or shared entrance space 84. Lounge assembly 85 is similar to the other lounge assemblies discussed herein. However, instead of a separate entrance space for each seat 18, at least some of the seats include a shared entrance space 84.

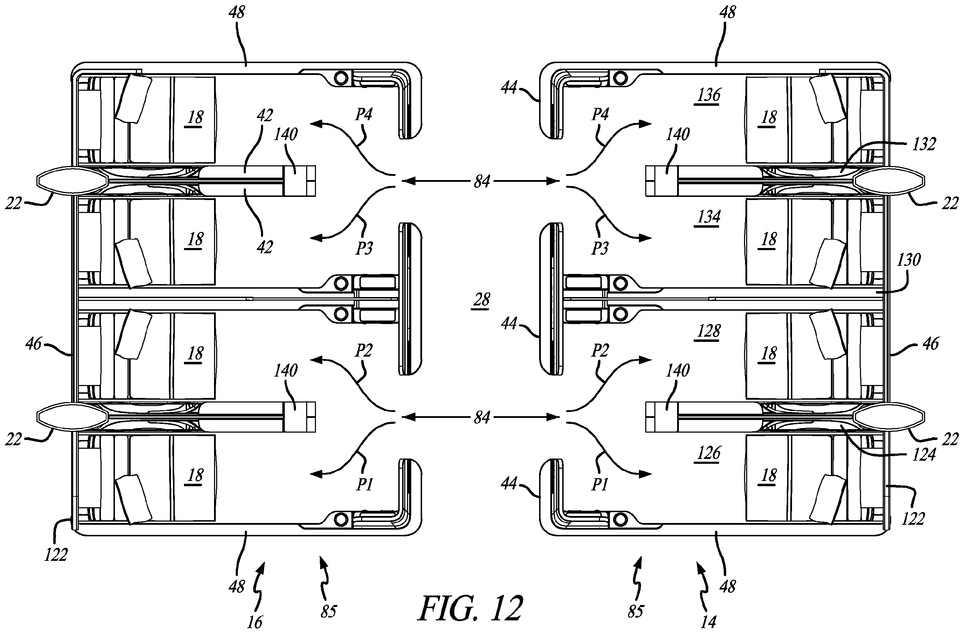

As shown in FIG. 12, in a preferred embodiment, the forward facing suite 14 and the aft facing suite 16 each include four seats 18, for a total of eight seats 18 and eight overhead storage bins 20, thereby providing each passenger with their own overhead storage bin 20. As is shown in FIG. 11, the overhead storage bin assembly 12 includes posts 22 that support the overhead storage bins 20 and associated components (passenger service units 52 and the like). In a preferred embodiment, the posts 22 include attachment feet 23 that are secured to the existing seat track in an aircraft. However, this is not a limitation and the posts 22, and or attachment feet 23 can be mounted to the aircraft at a point other than the seat track. In a preferred embodiment, the seats 18 are disposed within a seat shell or seat shells 24.

As shown in FIG. 12, the arrangement of the lounge assemblies 85 and the separation between them provides a single longitudinal main aisle 26 and perpendicular cross aisles 28. The cross aisles 28 provide access for passengers seated in either the aft facing suite 16 or forward facing suite 14 adjacent to the cross aisle 28. Furthermore, as discussed above, the lounge assembly 85 is arranged so that adjacent seats are accessible by a common entrance 84. Therefore, when passengers in adjacent seats (e.g., 2G and 2F) enter the cabin, they step through common entrance 84 and into their assigned seat or seat shell before placing their luggage 30 in their personal overhead storage bin 20, instead of holding up the other boarding passengers. The lounge assembly 85 includes an enclosure 122 that comprises the rear wall 46, first and second side walls 48 and the forward wall 44 (which includes a number of sections) that cooperate to define the overall seating area. A first dividing wall 124 is positioned between the first and second seats 18 and divides the seating area into a first seat section 126 and a second seat section 128. The shared entrance space 84 is defined in the front wall 44, and a first seat path P1 is defined between the shared entrance space 84 and the first seat section 126 and a second seat path P2 is defined between the shared entrance space 84 and the second seat section 128.

Preferably, a second dividing wall 130 is positioned between the second and third seats and a third dividing wall 132 positioned between the third and fourth seats. The third dividing wall 132 divides the seating area into a third seat section 134 and a fourth seat section 136. The front wall 44 includes a second shared entrance space 84 defined therein. A third seat path P3 is defined between the second shared entrance space 84 and the third seat section 134 and a fourth seat path P4 is defined between the second shared entrance space and the fourth seat section 136.

In a preferred embodiment, towers 140 are positioned at an end of the first and third dividing walls 124 and 132. The towers 140 each include first and second pivotable monitors 42 that are pivotable between a closed position and an open position.

FIG. 11 is a perspective view of a single forward facing lounge assembly 85 and illustrates a number of the different features thereof. For descriptive purposes, the four seats that are shown are labeled 2D, 2E, 2F and 2G. In a preferred embodiment, the lounge assembly 85 includes privacy dividers 32 positioned on the dividing walls that raise and lower to provide privacy for adjacent passengers. As will be appreciated, each row of four seats preferably includes three privacy dividers 32. As is shown in FIG. 11, the privacy dividers 32 between seats 2D, 2E and 2F are up and the privacy divider 32 between seats 2F and 2G is down. In a preferred embodiment, the privacy dividers 32 are housed in a slot 34 and can be raised and lowered by hand. In another embodiment, the privacy dividers 32 can be automated. In another embodiment, each seat can include a privacy divider 32. I.e., the seat adjacent the main aisle 26 can also include a privacy divider 32.

In a preferred embodiment of the invention, the lounge assembly 10 can also include tray tables 38, docks 40 for electronic devices, video/television monitors 42 that are pivotable (see seat 2D vs. seat 2F). As will appreciated by those of skill in the art, the seat shells 24 can include other known features and components, such as armrests, seat belts, audio/video controls, storage compartments, pillows, pockets and the like. However, none of these features are a limitation on the present invention and they can be omitted. It will be appreciated by those of ordinary skill in the art that other features and amenities can be included, and such features and amenities are within the scope of the present invention.

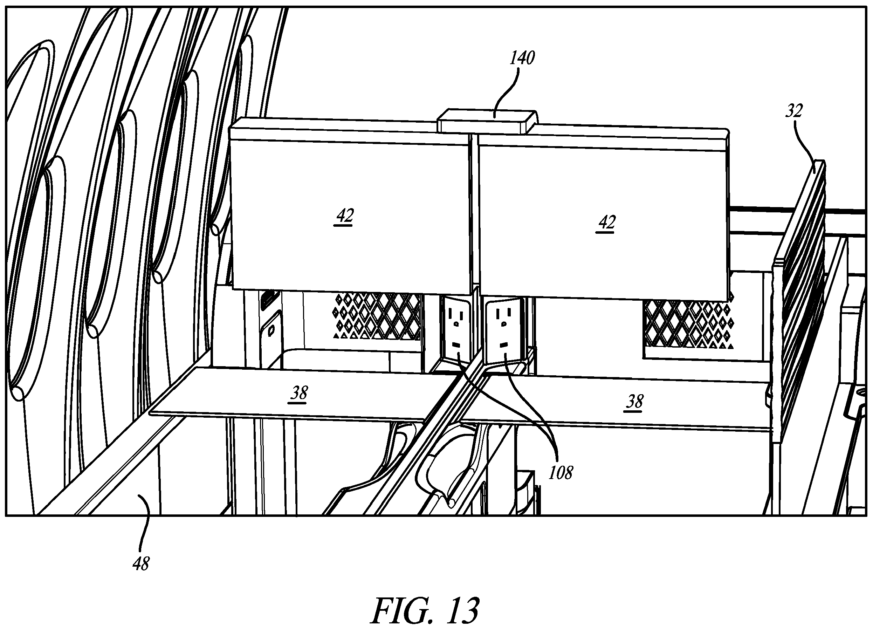

FIG. 13 shows an exemplary view of two adjacent seats with the divider 32 lowered and the "companion travel" aspect of the present invention. With the divider lowered 32, adjacent passengers can feel as though they are eating together (note adjacent tray tables 38), watching TV together (note adjacent monitors 42) or hanging out together.

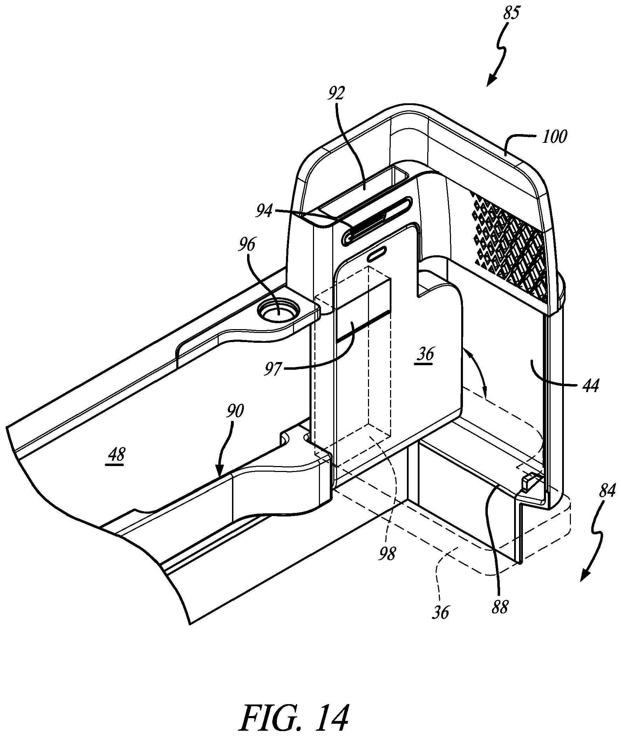

As shown in FIG. 14, each seat shell 24 or seat compartment includes a support 36 (e.g., footrest) at the end opposite the seat 18. The support 36 can be used for supporting the sleeping passengers feet or can be used to support a sitting passenger. With this feature, two passengers can sit within the same seat shell 24 on both the seat 18 and the support 36. The support 36 is foldable or pivotable such that it can be raised and lowered or otherwise stowed so that it is out of the way when not in use. The support 36 rests on a ledge 88 that is part of front wall 44 of the seat shell 24. In another example that is not covered by the annexed claims, the support 36 can rest on the floor or any object extending upwardly from the floor. Preferably, the supports 36 are wider than the seats 18 with which they are associated to maximize the sleeping surface. As shown in FIG. 14, in a preferred embodiment, each seating area includes storage space or pockets 90 for literature and/or emergency cards, a storage area 92 for amenities (e.g., a make up or toiletries bag), a coat hook 94, a cup holder 96 and shoe stowage space 98 (through opening 97) within the support 36. Opening 97 can include a door. The seat shells 24 can also include privacy dividers 100 that extend higher in some places than others.

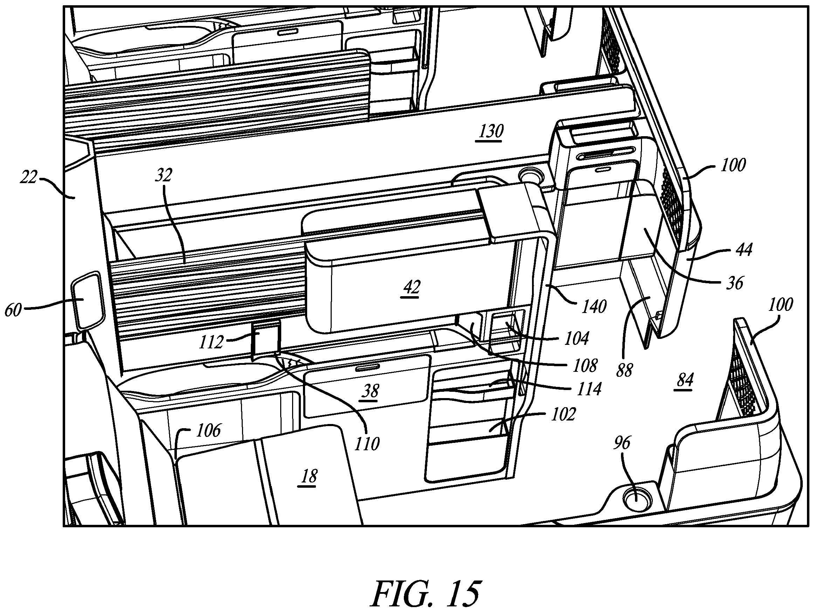

FIG. 15 shows another view of a seating area and includes other exemplary features that can be included, such as storage pockets or compartments 102 for items such as tablets and books, water bottle storage 104, life vest storage 106, input jack(s) 108 (e.g., USB, electrical power, headphone jacks, etc.), seat controller 110, personal control unit, handset 112, reading light 60, headphone storage 114, tray table 38 storage, and other accessories such as a smaller cocktail table, storage for eyeglasses, and personal accessories, etc.

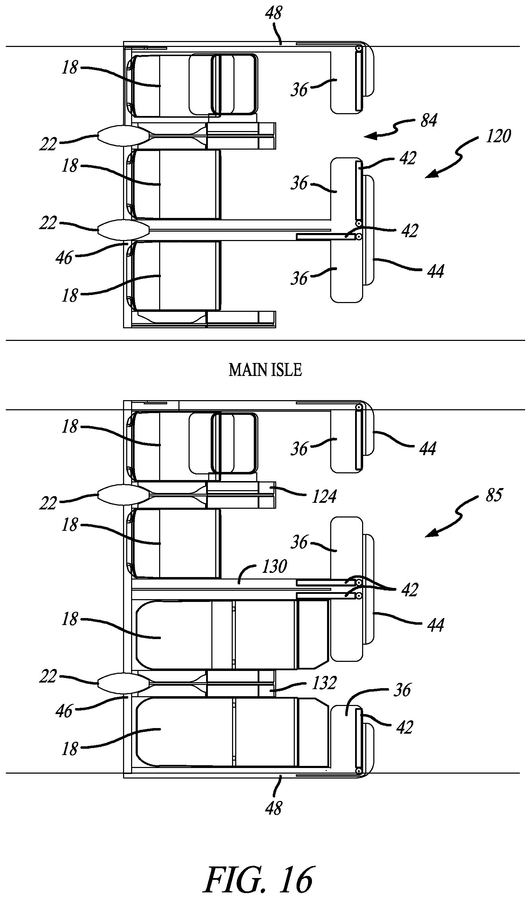

FIG. 16 shows another lounge assembly 120, similar to lounge assembly 85, but that includes only three seats 18 and corresponding seat areas/seat shells. Because of the odd number of seats, one of the seats does note share an entrance with an adjacent seat. The lounge assemblies 85 and 120 shown in FIGS. 16-17 also include television monitors 42 that are positioned toward the end (near the passenger's feet) of the seat area (see FIG.17).

Although exemplary embodiments of the invention have been shown and described, it is to be understood that all the terms used herein are descriptive rather than limiting, and that many changes, modifications, and substitutions may be made by one having ordinary skill in the art without departing from the scope of the invention. It will be understood that generally, disclosed herein is laterally positioned personal overhead storage space (such that it opens toward the front or rear of the aircraft) that is supported by the floor of an aircraft. The structure that supports the overhead bin may be one or posts, one or more seat shells, walls, monuments, etc. Accordingly, in a broadest sense, an embodiment can include a single post, secured to the floor of the aircraft that positions an overhead storage bin above a passenger. In another embodiment, the overhead storage bin may be positioned over the passenger seat by the seat shell. In another example that is not covered by the appended claims, the lounge assembly can comprise a single seat or single seat shell and seat with two posts that extend up to and support a single overhead storage bin. In other embodiments, the overhead bin can be supported from the floor and also from above, to provide extra support. The number of bins and number of posts is not a limitation on the present invention. Furthermore, the type of aircraft or plane is not a limitation on the present invention. The aircraft shown in the figures is a wide body aircraft. The present invention can also be used with a narrow body aircraft. For example, in a narrow body aircraft, the lounge assemblies may only include two seat shells and two overhead storage bins on each side of the aircraft.

In an embodiment, the seat shells can include walls that extend high enough to support the overhead bin above the seat. The seat shell is secured to the floor of the fuselage of the aircraft. Therefore, the overhead bin is ultimately secured to the floor of the aircraft.

In another example that is not covered by the annexed claims, the seat shells 24 can be omitted and the overhead bin assemblies 12 can be used with standalone seats 18. Furthermore, the type of seat shell 24 is not a limitation on the present invention. It will be understood that the bin does not have to be a pivot bin. It can be a moving bin or other type of articulating bin, as is known in the art.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description of the Preferred Embodiments using the singular or plural number may also include the plural or singular number respectively. The word "or" in reference to a list of two or more items, covers all of the following interpretations of the word: any of the items in the list, all of the items in the list, and any combination of the items in the list.

The above-detailed description of embodiments of the disclosure is not intended to be exhaustive or to limit the teachings to the precise form disclosed above. While specific embodiments of and examples for the disclosure are described above for illustrative purposes, various equivalent modifications are possible within the scope of the disclosure, as those skilled in the relevant art will recognize. Further, any specific numbers noted herein are only examples: alternative implementations may employ differing values, measurements or ranges.

The teachings of the disclosure provided herein can be applied to other systems, not necessarily the system described above. The elements and acts of the various embodiments described above can be combined to provide further embodiments. Any measurements or dimensions described or used herein are merely exemplary and not a limitation on the present invention.

These and other changes can be made to the disclosure in light of the above Detailed Description of the Preferred Embodiments. While the above description describes certain embodiments of the disclosure, and describes the best mode contemplated, no matter how detailed the above appears in text, the teachings can be practiced in many ways. As noted above, particular terminology used when describing certain features or aspects of the disclosure should not be taken to imply that the terminology is being redefined herein to be restricted to any specific characteristics, features or aspects of the disclosure with which that terminology is associated. In general, the terms used in the following claims should not be construed to limit the disclosures to the specific embodiments disclosed in the specification unless the above Detailed Description of the Preferred Embodiments section explicitly defines such terms. Accordingly, the actual scope of the disclosure encompasses not only the disclosed embodiments, but also all equivalent ways of practicing or implementing the disclosure under the claims.

## Claims

1. An aircraft lounge assembly (85, 120) comprising:
an enclosure (122) that includes a rear wall (46), first and second side walls (48) and a forward wall (44) that cooperate to define a seating area,
first and second seats (18) positioned in the seating area, and
a first dividing wall (124) positioned between the first and second seats, wherein the first dividing wall divides the seating area into a first seat section (126) and a second seat section (128), wherein the front wall includes a shared entrance space (84) defined therein, wherein a first seat path (P1) is defined between the shared entrance space and the first seat section and a second seat path (P2) is defined between the shared entrance space and the second seat section,
the aircraft lounge assembly further comprising a first support (36) positioned in the first seat section adjacent the front wall and pivotable between a first position and a second position, and a second support (36) positioned in the second seat section adjacent the front wall and pivotable between a first position and a second position,
wherein the front wall includes a first ledge (88) on which the first support is positioned when it is in the second position, and a second ledge (88) on which the second support is positioned when it is in the second position.

2. The aircraft lounge assembly (85, 120) of claim 1 wherein the first dividing wall (124) includes a privacy divider (32) that is movable up and down between first and second positions.

3. The aircraft lounge assembly (85, 120) of claim 1 further comprising an overhead storage bin assembly (12) that includes at least a first post (22) configured to be secured to a floor of the aircraft, wherein the first post is positioned generally between the first and second seats (18), and an overhead bin housing supported by the first post.

4. The aircraft lounge assembly (85, 120) of claim 3 wherein the overhead bin housing includes at least first and second overhead storage bins (20) that are positioned generally above the first and second seats (18), respectively.

5. The aircraft lounge assembly (85, 120) of claim 1 further comprising a tower (140) positioned at an end of the first dividing wall (124), wherein the tower includes first and second pivotable monitors (42) connected thereto, wherein the first monitor is pivotable between a closed position and an open position where it is positioned in the first seat section (126), wherein the second monitor is pivotable between a closed position and an open position where it is positioned in the second seat section (128).

6. The aircraft lounge assembly (85, 120) of claim 1 further comprising third and fourth seats positioned in the seating area, a second dividing wall (130) positioned between the second and third seats and a third dividing wall (132) positioned between the third and fourth seats, wherein the third dividing wall divides the seating area into a third seat section (134) and a fourth seat section (136), wherein the front wall includes a second shared entrance space (84) defined therein, wherein a third seat path (P3) is defined between the second shared entrance space and the third seat section and a fourth seat path (P4) is defined between the second shared entrance space and the fourth seat section.

7. The aircraft lounge assembly (85, 120) of claim 6 wherein the first dividing wall (124) includes a first privacy divider (32) that is movable up and down between first and second positions, the second dividing wall (130) includes a second privacy divider (32) that is movable up and down between first and second positions, and the third dividing (132) wall includes a third privacy divider (32) that is movable up and down between first and second positions.

8. The aircraft lounge assembly (85, 120) of claim 6 further comprising an overhead storage bin assembly (12) that includes at least first and second posts (22) each configured to be secured to a floor of the aircraft, wherein the first post is positioned generally between the first and second seats, wherein the second post is positioned generally between the third and fourth seats, and an overhead bin housing supported by the first and second posts.

9. The aircraft lounge assembly (85, 120) of claim 8 wherein the overhead bin housing includes at least first, second, third and fourth overhead storage bins (20) that are positioned generally above the first, second, third and fourth seats, respectively.

10. The aircraft lounge assembly (85, 120) of claim 6 wherein the second dividing wall (130) extends between the rear wall and the front wall.

11. The aircraft lounge assembly (85, 120) of claim 10 wherein the first and third dividing walls (124, 132) do not extend to the front wall (44).

12. The aircraft lounge assembly (85, 120) of claim 1 further comprising a third seat positioned in the seating area, a second dividing wall (130) positioned between the second and third seats (18), wherein the second dividing wall divides the seating area into a third seat section (134), wherein the enclosure includes a third seat section entrance (84), wherein a third seat path (P3) is defined between the third seat section entrance and the third seat.

13. The aircraft lounge assembly (85, 120) of claim 4 wherein when the lounge assembly is positioned in the interior of an aircraft, the first and second storage bins (20) face forward.

## Patentansprüche

1. Luftfahrzeug-Loungeanordnung (85, 120), Folgendes beinhaltend:
eine Einhausung (122), umfassend eine hintere Wand (46), eine erste und eine zweite Seitenwand (48) und eine vordere Wand (44), welche zusammenarbeiten, um einen Sitzbereich zu definieren,
einen ersten und einen zweiten Sitz (18), welche in dem Sitzbereich positioniert sind, und
eine erste Trennwand (124), welche zwischen dem ersten und dem zweiten Sitz positioniert ist, wobei die erste Trennwand den Sitzbereich in einen ersten Sitzabschnitt (126) und einen zweiten Sitzabschnitt (128) unterteilt, wobei die vordere Wand einen darin definierten gemeinsam genutzten Eingangsraum (84) umfasst, wobei ein erster Sitzgang (P1) zwischen dem gemeinsam genutzten Eingangsraum und dem ersten Sitzabschnitt definiert ist und ein zweiter Sitzgang (P2) zwischen dem gemeinsam genutzten Eingangsraum und dem zweiten Sitzabschnitt definiert ist,
wobei die Luftfahrzeug-Loungeanordnung zudem eine erste Stütze (36) beinhaltet, welche in dem ersten Sitzabschnitt angrenzend an die vordere Wand positioniert ist und zwischen einer ersten Position und einer zweiten Position schwenkbar ist, und eine zweite Stütze (36) in dem zweiten Sitzabschnitt angrenzend an die vordere Wand positioniert und zwischen einer ersten Position und einer zweiten Position schwenkbar ist,
wobei die vordere Wand eine erste Leiste (88) umfasst, an welcher die erste Stütze positioniert ist, wenn sie in der zweiten Position steht, und eine zweite Leiste (88), an welcher die zweite Stütze positioniert ist, wenn sie in der zweiten Position steht.

2. Luftfahrzeug-Loungeanordnung (85, 120) nach Anspruch 1, bei welcher die erste Trennwand (124) einen Privatsphärenteiler (32) umfasst, welcher zwischen einer ersten und einer zweiten Position nach oben und nach unten beweglich ist.

3. Luftfahrzeug-Loungeanordnung (85, 120) nach Anspruch 1, zudem beinhaltend eine Überkopf-Ablagebehälteranordnung (12), welche mindestens einen ersten Pfosten (22) umfasst, welcher konfiguriert ist, um an einem Boden des Luftfahrzeugs gesichert zu werden, wobei der erste Pfosten allgemein zwischen dem ersten und dem zweiten Sitz (18) positioniert ist, und ein Überkopf-Behältergehäuse durch den ersten Pfosten gestützt wird.

4. Luftfahrzeug-Loungeanordnung (85, 120) nach Anspruch 3, bei welcher das Überkopf-Behältergehäuse mindestens einen ersten und einen zweiten Überkopf-Ablagebehälter (20) umfasst, welche allgemein jeweils über dem ersten und dem zweiten Sitz (18) positioniert sind.

5. Luftfahrzeug-Loungeanordnung (85, 120) nach Anspruch 1, zudem beinhaltend einen Turm (140), welcher an einem Ende der ersten Trennwand (124) positioniert ist, wobei der Turm einen damit verbundenen ersten und zweiten schwenkbaren Monitor (42) umfasst, wobei der erste Monitor zwischen einer geschlossenen Position und einer geöffneten Position schwenkbar ist, in welcher er in dem ersten Sitzabschnitt (126) positioniert ist, wobei der zweite Monitor zwischen einer geschlossenen Position und einer geöffneten Position schwenkbar ist, in welcher er in dem zweiten Sitzabschnitt (128) positioniert ist.

6. Luftfahrzeug-Loungeanordnung (85, 120) nach Anspruch 1, zudem beinhaltend einen dritten und einen vierten Sitz, welche in dem Sitzbereich positioniert sind, eine zweite Trennwand (130), welche zwischen dem zweiten und dem dritten Sitz positioniert ist und eine dritte Trennwand (132), welche zwischen dem dritten und den vierten Sitz positioniert ist, wobei die dritte Trennwand den Sitzbereich in einen dritten Sitzabschnitt (134) und einen vierten Sitzabschnitt (136) unterteilt, wobei die vordere Wand einen darin definierten zweiten gemeinsam genutzten Eingangsraum (84) umfasst, wobei ein dritter Sitzgang (P3) zwischen dem zweiten gemeinsam genutzten Eingangsraum und dem dritten Sitzabschnitt definiert ist und ein vierter Sitzgang (P4) zwischen dem zweiten gemeinsam genutzten Eingangsraum und dem vierten Sitzabschnitt definiert ist.

7. Luftfahrzeug-Loungeanordnung (85, 120) nach Anspruch 6, bei welcher die erste Trennwand (124) einen ersten Privatsphärenteiler (32) umfasst, welcher zwischen einer ersten und einer zweiten Position nach oben und nach unten beweglich ist, wobei die zweite Trennwand (130) einen zweiten Privatsphärenteiler (32) umfasst, welcher zwischen einer ersten und einer zweiten Position nach oben und nach unten beweglich ist, und die dritte Trennwand (132) einen dritten Privatsphärenteiler (32) umfasst, welcher zwischen einer ersten und einer zweiten Position nach oben und nach unten beweglich ist.

8. Luftfahrzeug-Loungeanordnung (85, 120) nach Anspruch 6, zudem beinhaltend eine Überkopf-Ablagebehälteranordnung (12), welche mindestens einen ersten und einen zweiten Pfosten (22) umfasst, welche jeweils konfiguriert sind, um an einem Boden des Luftfahrzeugs gesichert zu werden, wobei der erste Pfosten allgemein zwischen dem ersten und dem zweiten Sitz positioniert ist, wobei der zweite Pfosten allgemein zwischen dem dritten und dem vierten Sitz positioniert ist, und ein Überkopf-Behältergehäuse durch den ersten und den zweiten Pfosten gestützt wird.

9. Luftfahrzeug-Loungeanordnung (85, 120) nach Anspruch 8, bei welcher das Überkopf-Behältergehäuse mindestens einen ersten, einen zweiten, einen dritten und einen vierten Überkopf-Ablagebehälter (20) umfasst, welche allgemein jeweils über dem ersten, dem zweiten, dem dritten und dem vierten Sitz positioniert sind.

10. Luftfahrzeug-Loungeanordnung (85, 120) nach Anspruch 6, bei welcher die zweite Trennwand (130) sich zwischen der hinteren Wand und der vorderen Wand erstreckt.

11. Luftfahrzeug-Loungeanordnung (85, 120) nach Anspruch 10, bei welcher die erste und die dritte Trennwand (124, 132) sich nicht bis zur vorderen Wand (44) erstrecken.

12. Luftfahrzeug-Loungeanordnung (85, 120) nach Anspruch 1, zudem beinhaltend einen dritten Sitz, welcher in dem Sitzbereich positioniert ist, eine zweite Trennwand (130), welche zwischen dem zweiten und dem dritten Sitz (18) positioniert ist, wobei die zweite Trennwand den Sitzbereich in einen dritten Sitzabschnitt (134) unterteilt, wobei die Einhausung einen dritten Sitzabschnitteingang (84) umfasst, wobei ein dritter Sitzgang (P3) zwischen dem dritten Sitzabschnitteingang und dem dritten Sitz definiert ist.

13. Luftfahrzeug-Loungeanordnung (85, 120) nach Anspruch 4, bei welcher, wenn die Loungeanordnung im Inneren eines Luftfahrzeugs positioniert ist, der erste und der zweite Ablagebehälter (20) nach vorn weisen.

## Revendications

1. Ensemble salon d'aéronef (85, 120) comprenant :
une enceinte (122) qui inclut une paroi arrière (46), des première et seconde parois latérales (48) et une paroi avant (44) qui coopèrent pour définir une zone de sièges,
des premier et second sièges (18) positionnés dans la zone de sièges, et
une première paroi de séparation (124) positionnée entre les premier et second sièges, dans lequel la première paroi de séparation divise la zone de sièges en une première section de siège (126) et une seconde section de siège (128), dans lequel la paroi avant inclut un espace d'entrée commune (84) défini dans celle-ci, dans lequel un premier chemin de siège (P1) est défini entre l'espace d'entrée commune et la première section de siège et un second chemin de siège (P2) est défini entre l'espace d'entrée commune et la seconde section de siège,
l'ensemble salon d'aéronef comprenant en outre un premier support (36) positionné dans la première section de siège de façon adjacente à la paroi avant et pouvant pivoter entre une première position et une seconde position, et un second support (36) positionné dans la seconde section de siège de façon adjacente à la paroi avant et pouvant pivoter entre une première position et une seconde position,
dans lequel la paroi avant inclut une première saillie (88) sur laquelle le premier support est positionné lorsqu'il est dans la seconde position, et une seconde saillie (88) sur laquelle le second support est positionné lorsqu'il est dans la seconde position.

2. Ensemble salon d'aéronef (85, 120) selon la revendication 1, dans lequel la première paroi de séparation (124) inclut une cloison d'intimité (32) qui est mobile vers le haut et vers le bas entre des première et seconde positions.

3. Ensemble salon d'aéronef (85, 120) selon la revendication 1, comprenant en outre un ensemble de casier de rangement supérieur (12) qui inclut au moins un premier montant (22) configuré pour être fixé à un plancher de l'aéronef, dans lequel le premier montant est positionné généralement entre les premier et second sièges (18), et un caisson de casier supérieur supporté par ledit montant.

4. Ensemble salon d'aéronef (85, 120) selon la revendication 3, dans lequel le caisson de casier supérieur inclut au moins des premier et second casiers de rangement supérieurs (20) positionnés respectivement généralement au-dessus des premier et second sièges (18).

5. Ensemble salon d'aéronef (85, 120) selon la revendication 1, comprenant en outre un pylône (140) positionné à une extrémité de la première paroi de séparation (124), dans lequel le pylône inclut des premier et second écrans pivotants (42) connectés à celui-ci, dans lequel le premier écran peut pivoter entre une position fermée et une position ouverte dans laquelle il est positionné dans la première section de siège (126), et le second écran peut pivoter entre une position fermée et une position ouverte dans laquelle il est positionné dans la seconde section de siège (128).

6. Ensemble salon d'aéronef (85, 120) selon la revendication 1, comprenant en outre des troisième et quatrième sièges positionnés dans la zone de sièges, une seconde paroi de séparation (130) positionnée entre les second et troisième sièges et une troisième paroi de séparation (132) positionnée entre les troisième et quatrième sièges, dans lequel la troisième paroi de séparation divise la zone de sièges en une troisième section de siège (134) et une quatrième section de siège (136), dans lequel la paroi avant inclut un second espace d'entrée commune (84) défini dans celle-ci, dans lequel un troisième chemin de siège (P3) est défini entre le second espace d'entrée commune et la troisième section de siège et un quatrième chemin de siège (P4) est défini entre le second espace d'entrée commune et la quatrième section de siège.

7. Ensemble salon d'aéronef (85, 120) selon la revendication 6, dans lequel la première paroi de séparation (124) inclut une première cloison d'intimité (32) qui est mobile vers le haut et vers le bas entre des première et seconde positions, la seconde paroi de séparation (130) inclut une seconde cloison d'intimité (32) qui est mobile vers le haut et vers le bas entre des première et seconde positions, et la troisième paroi de séparation (132) inclut une troisième cloison d'intimité (32) qui est mobile vers le haut et vers le bas entre des première et seconde positions.

8. Ensemble salon d'aéronef (85, 120) selon la revendication 6, comprenant en outre un ensemble de casier de rangement supérieur (12) qui inclut au moins des premier et second montants (22) configurés chacun pour être fixés à un plancher de l'aéronef, le premier montant étant positionné généralement entre les premier et second sièges, et le second montant étant positionné généralement entre les troisième et quatrième sièges, et un caisson de casier supérieur supporté par les premier et second montants.

9. Ensemble salon d'aéronef (85, 120) selon la revendication 8, dans lequel le caisson de casier supérieur inclut au moins des premier, second, troisième et quatrième casiers de rangement supérieurs (20) qui sont positionnés respectivement généralement au-dessus des premier, second, troisième et quatrième sièges.

10. Ensemble salon d'aéronef (85, 120) selon la revendication 6, dans lequel la seconde paroi de séparation (130) s'étend entre la paroi arrière et la paroi avant.

11. Ensemble salon d'aéronef (85, 120) selon la revendication 10, dans lequel les première et troisième parois de séparation (124, 132) ne s'étendent pas jusqu'à la paroi avant (44).

12. Ensemble salon d'aéronef (85-120) selon la revendication 1, comprenant en outre un troisième siège positionné dans la zone de sièges, une seconde paroi de séparation (130) positionnée entre les second et troisième sièges (18), dans lequel la seconde paroi de séparation divise la zone de sièges en une troisième section de siège (134), dans lequel l'enceinte inclut une troisième entrée de section de siège (84), et un troisième chemin de siège (P3) est défini entre la troisième entrée de section de siège et le troisième siège.

13. Ensemble salon d'aéronef (85, 120) selon la revendication 4, dans lequel lorsque l'ensemble salon est positionné dans l'intérieur d'un aéronef, les premier et second casiers de rangement (20) sont tournés vers l'avant.
